# EUROPÄISCHE PATENTSCHRIFT

(11) **EP 2 164 895 B1**
(45) Veröffentlichungstag und Bekanntmachung des Hinweises auf die Patenterteilung: **25.02.2015**
(21) Anmeldenummer: 08760251.2
(22) Anmeldetag: 30.05.2008
(51) Int. Cl.: C08J 11/10, C08J 11/28, C08L 17/00, C08C 19/08, C08L 21/00

(54) **VERFAHREN ZUR REGENERIERUNG VON KAUTSCHUKEN**
METHOD FOR THE REGENERATION OF RUBBERS
PROCÉDÉ DE RÉGÉNÉRATION DE CAOUTCHOUCS

(30) Priorität: 05.06.2007 DE 102007026173; 05.05.2008 DE 102008001543
(43) Veröffentlichungstag der Anmeldung: 24.03.2010
(73) Patentinhaber: Rhein Chemie Rheinau GmbH, 68219 Mannheim (DE)
(72) Erfinder: FRÜH, Dr.Thomas, 67117 Mutterstadt (DE); HEILIGER, Ludger, 67433 Neustadt (DE); MÜLLER, Giogio, 68723 Oftersheim (DE); GRAF, Hans-Joachim, 63628 Bad Soden-Salmünster (DE)
(74) Vertreter: Siegers, Britta
(86) Internationale Anmeldenummer: PCT/EP2008/056661
(87) Internationale Veröffentlichungsnummer: WO 2008/148706

(56) Entgegenhaltungen:
- EP-A- 0 744 436
- EP-A- 0 889 030
- EP-A- 1 110 972
- ABELE M ET AL: "Neue Erkenntnisse auf dem Gebiet der chemisch beschleunigten Mastikation" KAUTSCHUK UND GUMMI - KUNSTSTOFFE, HUTHIG VERLAG, HEIDELBERG, DE, Bd. 42, Nr. 3, 1. Januar 1989 (1989-01-01), Seiten 209-216, XP002163374 ISSN: 0948-3276

## Beschreibung

Die vorliegende Erfindung betrifft ein Verfahren zur Regenerierung (Devulkanisierung) von schwefelvernetzten Gummivulkanisaten sowie die Verwendung von Dialkylpolysulfiden bei der Regenerierung dieser Gummivulkanisate.

Altreifen und Abfallprodukte aus technischen schwefelvernetzten Gummiartikeln oder beispielsweise Dachbahnen stellen ein umfangreiches Rohstoffpotential dar. Gleichzeitig ergeben sich jedoch aus der stetig steigenden Anfallmenge erhebliche Umweltbelastungen. Unter Beachtung der Prinzipien der Kreislaufwirtschaft sowie angesichts der Anstrengungen zur weltweiten Verringerung der CO₂-Emission kommt dem Recycling von Altreifen und Abfallprodukten aus technischen schwefelvernetzten Gummiartikeln eine steigende Bedeutung zu.

Altgummi fällt beispielsweise in großer Menge in Form von nicht mehr runderneuerbaren Karkassen von Autoreifen an. Derartige Altreifen stellen ein erhebliches Entsorgungsproblem dar. Bei der bisher üblichen Entsorgung durch Verbrennen erzeugen sie eine große Menge an schadstoffhaltigen Abgasen, für deren Entsorgung wiederum aufwendige Filteranlagen erforderlich sind.

Es sind einige Verfahren bekannt, mit welchen eine Regenerierung durch Devulkanisation von schwefelvernetzten Gummivulkanisaten, die beispielsweise aus Altreifen stammen können, gelingt.

So beschreibt beispielsweise die WO-A1-01/23465 den Einsatz von Aminen für die gezielte Devulkanization des Schwefelnetzwerkes.

Ferner beschreiben M. Mouri, N. Sato, H. Okamoto, M. Matsushita et. al. in "A New Devulcanisation Process. Continious Reclamation of Rubber by Shear Flow Reaction Control Technology (Part II)", Polymer Recycling, Vol. 4, No. 4. (1999), Seiten 247 bis 253 EPDM und Butylvulkanisate, welche mit Hilfe eines Zwei-Wellen-Extruders und verschiedenen Devulkanisationsmitteln regeneriert werden. Als Regenerierungsmittel werden dabei explizit verschiedene aromatische Disulfide sowie verschiedene alkylsubstituierte Disulfide erwähnt. Insgesamt wird in dieser Veröffentlichung Dibenzyldisulfid als am wirkungsvollsten aller genannten Additive beschrieben.

In EP-Al-0 887 372 ist ferner ein Verfahren zur Devulkanisation von schwefelvernetztem Altgummi bekannt, wobei unter anderem Ethylen-Propylen-Dien-Kautschuke (EPDM) mit Hilfe von Zwei-Wellen-Knetern und unter Zusatz von Diallyldisulfid, Dixylyldisulfid, Thiophenol, Eisenoxid oder Diaryldisulfid regeneriert werden.

Aus IRC 1998 Conference Proceedings, Societe de Chimie Industrielle, 12. bis 14. Mai 1998, Seiten 289 und 290 ist ein Verfahren zur Regenerierung von schwefelvernetzten Gummivulkanisaten bekannt. Dabei werden als Regenerierungsmittel im Wesentlichen aromatische Disulfide wie Diphenyldisulfid verwendet.

Die zuvor beschriebenen Verbindungen, welche während der Regenerierung von schwefelvernetzten Gummivulkanisaten verwendet werden, sind einerseits teuer und andererseits aus toxischen Gründen verbesserungsbedürftig. Darüber hinaus sind die bei der Regenerierung von Gummivulkanisaten mit diesen Regenerierungsmitteln erhaltenen Ergebnisse nicht immer reproduzierbar. Ferner sind die bekannten Regenerierungsmittel nachteilig, da sie fest bzw. kristallin sind und sich somit schlecht in die zu regenerierenden Gummivulkanisate einmischen lassen. Ferner bildet ein Teil der bekannten Regenerierungsmittel Zerfallprodukte, die ihrerseits zu kanzerogenen Nitrosaminen weiterreagieren können. Gegenwärtig eingesetzte Regenerierungsmittel umfassen häufig Radikalstarter- und Radikalfängereinheiten in einem Molekül, was ebenfalls nicht zu optimalen Ergebnissen beim Regenerieren führt. Insgesamt ergibt sich damit ein Bedarf an weiteren, alternativen Regenerierungsmitteln, welche die zuvor geschilderten Nachteile nicht aufweisen.

Damit ergibt sich für die vorliegende Erfindung die Aufgabe, ein Verfahren zur Regenerierung von schwefelvernetzten Gummivulkanisaten zur Verfügung zu stellen, bei dem vorzugsweise ein nichttoxisches, vorzugsweise gut verteilbares Regenerierungsmittel verwendet wird, welches in der Lage ist, bei der Regenerierung von schwefelvernetzten Gummivulkanisaten im Wesentlichen reproduzierbare Ergebnisse zu liefern. Darüber hinaus sollte das Regenerierungsmittel vorzugsweise kostengünstig herzustellen sein, so dass eine umfangreiche Verwendung zur Regenerierung von Gummivulkanisaten unter ökonomischen Gesichtspunkten möglich ist.

Gelöst wird diese Aufgabe durch ein Verfahren zur Regenerierung von schwefelvernetzten Gummivulkanisaten. Das erfindungsgemäße Verfahren ist dann dadurch gekennzeichnet, dass man bei der Regenerierung mindestens ein Dialkylpolysulfid als Regenerierungsmittel verwendet.

Überraschenderweise hat sich herausgestellt, dass sich Dialkylpolysulfide als Regenerierungsmittel für schwefelvernetzte Gummivulkanisate eignen. Dieses ist überraschend, da man bisher Polysulfiden im Allgemeinen unterstellt hat, dass sie eine Wirkung als Schwefeldonor aufweisen, d.h. zur Vernetzung von Kautschuk dienen können, und damit genau die umgekehrte Reaktion bewirken.

Die unter Verwendung der erfindungsgemäß vorgesehenen Dialkylpolysulfide erzeugten regenerierten, d.h. devulkanisierten Gummimaterialien können für eine erneute Vulkanisation und damit zur erneuten Herstellung von vulkanisiertem Gummi verwendet werden.

In dem erfindungsgemäßen Verfahren werden vorzugsweise Dialkylpolysulfide der allgemeinen Formel (1) verwendet, 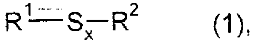 worin
R¹ und R² gleich oder verschieden sind und für einen linearen oder verzweigten C₁-C₁₈-Alkylrest stehen und x für die Zahlen 2 bis 12 steht.

Darüber hinaus ist es weiter bevorzugt, dass man als Dialkylpolysulfide solche einsetzt, bei denen x in der allgemeinen Formel (1) für die Zahlen 3 bis 5 steht.

Darüber hinaus ist es weiter bevorzugt, wenn als Dialkylpolysulfide solche eingesetzt werden, in denen R¹ und R² in der allgemeinen Formel für lineare oder verzweigte C₅- bis C₁₅-Alkylreste stehen.

Es ist besonders bevorzugt, wenn als Dialkylpolysulfide solche eingesetzt werden, in denen x in der allgemeinen Formel (1) für die Zahlen 3 bis 5 steht und R¹ bis R³ in der allgemeinen Formel für lineare öder verzweigte C₅- bis C₁₅- Alkylreste stehen.

Ganz besonders bevorzugte Dialkylpolysulfide, welches im Rahmen der vorliegenden Erfindung verwendet werden können, sind Dioctylpentasulfide oder Dioctyltetrasulfide. Noch weiter bevorzugt sind verzweigte Dioctylpentasulfide und verzweigte Dioctyltetrasulfide.

Ein beispielsweise kommerziell erhältiches Regenerierungsmittel ist Additin^{®} RC 2540, erhältlich von der Rhein Chemie Rheinau GmbH, Mannheim (Deutschland).

Die Dialkylpolysulfide können sowohl einzeln als auch in beliebiger Abmischung untereinander in dem erfindungsgemäßen Verfahren eingesetzt werden.

Üblicherweise werden die Dialkylpolysulfide in Mengen von 1 bis 30 phr, besonders bevorzugt 3 bis 25 phr, insbesondere von 5 bis 20 phr, jeweils bezogen auf das zu devulkanisierenden Gummivulkanisat eingesetzt.

Selbstverständlich ist es möglich, die erfindungsgemäß vorgesehenen Regenerierungsmittel zusammen in Mischung mit anderen Regenerierungsmitteln zu verwenden, beispielsweise mit den eingangs beschriebenen Regenerierungsmitteln des Standes der Technik. Sollten aus technischen Gründen neben den erfindungsgemäßen Regenerierungsmittel noch andere, bekannte Regenerierungsmittel zugemischt werden, so können diese in Mengen von 1 bis 30 phr, besonders bevorzugt 3 bis 25 phr, insbesondere von 5 bis 20 phr, jeweils bezogen auf das zu devulkanisierenden Gummivulkanisat eingesetzt werden. Auch entsprechende Mastizierwirkstoffe, wie beispielsweise Verbindungen der Marke Renacit^{®} der Firma Lanxess, insbesondere Renacit^{®} 11, können zusätzlich verwendet werden.

Da die beschriebenen Dialkylpolysulfide üblicherweise in flüssiger Konsistenz vorliegen, erleichtert dies die Einarbeitung der Dialkylpolysulfide in die zu regenerierenden Gummivulkanisate und führt so zu einer homogenen Verteilung in den Gummivulkanisaten mit dem besonderen Vorteil, dass zum Erreichen einer Gleichgewichtsverteilung der Regenerierungsmittel kein Bindemittel oder unerwünschte Verdünnungsmedien bzw. Dispergierhilfsmittel nötig sind. Bindemittel bzw. Verdünnungsmedien sind im Allgemeinen unerwünscht, da sie keinen Wirkstoff tragen und damit in der eigentlichen Regenerierung keine chemische Funktion erfüllen.

Da die erfindungsgemäß vorgesehenen Dialkylpolysulfide, wie bereits erwähnt, üblicherweise in flüssiger Konsistenz vorliegen, können nach Abmischung mit festen Regeneriermitteln darüber hinaus leicht erweichende Pasten oder sogenannte feste Lösungen hergestellt werden, die durch Schmelzpunktabsenkung der hochschmeizenden Komponente eine erleichterte Einarbeitung der Kombinationsprodukte ermöglichen. Unter festen Lösungen werden im Rahmen der vorliegenden Erfindung Mischungen aus mindestens zwei Stoffen verstanden, die jeweils einzeln klar erkennbare und unterscheidbare Schmelzpunkte aufweisen und die nach Kombination einen gemeinsamen Erweichungsbereich, der unterhalb des höher schmelzenden Stoffes beginnt, besitzen.
Selbstverständlich ist es möglich, falls dieses aus technischen Gründen gewünscht wird, die in flüssiger Konsistenz vorliegenden Dialkylpolysulfide auch auf einen festen, inerten Träger, aufzuziehen, und die Dialkylpolysulfide so in geträgerter Form den zu regenerierenden Gummivulkanisaten zuzugeben. Als inerte Träger kommen alle bekannten Trägermaterialien in Frage, wie
- Ruße. Die hierbei zu verwendenden Ruße sind nach dem Flammruß-, Furnace- oder Gasrußverfahren hergestellt und besitzen BET- Oberflächen von 20 bis 200 m²/g wie z.B.: SAF-, ISAF-, IISAF-; HAF-, FEF- oder GPF-Ruße,
- hochdisperse Kieselsäure, hergestellt z.B. durch Fällungen von Lösungen von Silikaten oder Flammhydrolyse von Siliciumhalogeniden mit spezifischen Oberflächen von 5- 1000, vorzugsweise 20 bis 400 m²/g (BET-Oberfläche) und Primärteiichengrößen von 5 bis 400 nm. Die Kieselsäuren können gegebenenfalls auch als Mischoxide mit anderen Metalloxiden, wie Al-, Mg-, Ca-, Ba, Zn- und Ti-Oxiden,
- synthetische Silikate, wie Aluminiumsilikat, Erdalkalisilikat, wie Magnesiumsilikat oder Calciumsilikat mit BET- Oberflächen von 20 bis 400 m²/g und Primärteilchendurchmessern von 5 bis 400 nm,
- natürliche Silikate, wie Kaolin und andere natürlich vorkommende Kieselsäure,
- Metalloxide, wie Zinkoxid, Calciumoxid, Magnesiumoxid, Aluminiumoxid,
- Metallcarbonate, wie Calciumcarbonat, Magnesiumcarbonat, Zinkcarbonat,
- Metallsulfate, wie Calciumsulfat, Bariumsulfat,
- Metallhydroxide, wie Aluminiumhydroxid und Magnesiumhydroxid,
- sowie organische Trägermaterialien - soweit sie das erfindungsgemäße Verfahren nicht nachteilig beeinflussen, wie Faktisse, Dispergierharze oder Wachse.

Insbesondere werden als Träger Silica und/oder Ruß verwendet.

Das erfindungsgemäße Verfahren eignet sich im Allgemeinen für alle Arten von schwefelvernetzten Gummivulkanisaten. Insbesondere eignet sich das erfindungsgemäße Verfahren für Polydiene, welche beispielsweise aus der R-Gruppe, umfassend Naturkautschuke (NR), Styrol-Butadien-Kautschuke (SBR), Acrylnitril-Butadien-Kautschuke (NBR) und Butylkautschuke (IIR), ausgewählt sein können, und für Vulkanisate aus Kautschuken mit wenigen Doppelbindungen oder doppelbindungsfreien Polymerhauptketten, welche beispielsweise aus der M-Gruppe, umfassend EPDM, ausgewählt sein können. Für die Definition der Kautschuktypen wird auf DIN/ISO 1629 verwiesen. Darüber hinaus eignet sich das erfindungsgemäße Verfahren auch für Mischungen der zuvor genannten schwefelvernetzten Gummivulkanisate.

Die zu regenerierenden Gummivulkanisate werden vor der eigentlichen Regenerierung vorzugsweise einer Vorbehandlung unterzogen. Eine im erfindungsgemäßen Verfahren mögliche Vorbehandlung ist die Zerkleinerung der zu regenerierenden Gummivulkanisate, da die Regenerierung vorzugsweise ausgehend von rieselfähigen Ausgangsmaterialien der schwefelvernetzten Gummivulkanisate erfolgt. Dabei ist es im Allgemeinen wünschenswert, wenn die zu regenerierenden Gummivulkanisate eine Teilchenform in der Größenordnung von 0,1 bis 50 mm, besonders bevorzugt 0,3 bis 20 mm, noch bevorzugter 0,4 bis 10 mm, insbesondere 0,5 bis 5 mm, und besonders bevorzugt 0,6 bis 3 mm aufweisen.

Demgemäß ist es bevorzugt, wenn das zu regenerierende schwefelvernetzte Gummivulkanisat vor der eigentlichen Regenerierung zunächst zerkleinert wird. Die genaue Ausgestaltung dieser Zerkleinerungsvorbehandlung unterliegt grundsätzlich keiner besonderen Beschränkung, so lange wie rieselfähige Teilchen der zu regenerierenden Gummivulkanisate in der zuvor erwähnten Größenordnung erhalten werden. So kann das zu regenerierende Gummivulkanisat beispielsweise dadurch zerkleinert werden, dass das Rohmaterial auf einer eng eingestellten kalten Walze klein gerissen wird. Hierbei ist es vorteilhaft, wenn die kalte Walze auf die zu zerkleinernden Kautschukteilchen hohe Scherkräfte ausübt.

Die eigentliche Regenerierung kann dann mit dem zerkleinerten Material in Vorrichtungen durchgeführt werden, in welchen üblicherweise Gummivulkanisate hergestellt oder verarbeitet werden, so dass das vorliegende Verfahren in häufig bereits vorhandenen Vorrichtungen angewendet werden kann. In dieser Hinsicht sind insbesondere Mischaggregate, wie Extruder, Innenmischer, Kneter oder Walzwerke zu nennen. Die Verwendung von Extrudern und Innenmischern ist dabei besonders bevorzugt und wird nun im Folgenden näher erläutert, wobei jedoch auch eine Verarbeitung in den anderen Vorrichtungen erfindungsgemäß möglich ist.

Wenn die Regenerierung in einem Extruder durchgeführt wird, so unterliegt die Art des Extruders keiner besonderen Beschränkung und es können alle dem Fachmann an sich bekannten Extruder verwendet werden. Geeignet sind beispielsweise Doppelschneckenextruder oder Planetwalzenextruder. Die Regenerierung in einem Extruder erfolgt im Allgemeinen wie folgt: Zur Durchführung der Regenerierung werden die Schnecken der Extruder zunächst vorzugsweise auf eine hohe Scherung eingestellt und dann wird das zu regenerierende Gummivulkanisat in Form von rieselfähigen Teilchen kalt eindosiert und danach gegebenenfalls erwärmt. Das Eindosieren der Teilchen der Gummivulkanisate erfolgt vorzugsweise am Beginn der Verfahrenslänge des Extruders. Das erfindungsgemäße Regenerierungsmittel wird im Allgemeinen separat kurz nach der Zugabe des Gummivulkanisats in den Extruder eingeführt. Schließlich kann gegebenenfalls noch ein Öl, beispielsweise Paraffinöl, in den Extruder eindosiert werden, um eine kompakte Masse, die den Kneterwellen und Extruderschnecken einen größeren Widerstand bietet als ein rieselfähiges Material, zu erzeugen (Volumenerhöhung und gegebenenfalls Vermeiden eines Durchgehens der Reaktion). Falls Öl in den Extruder zudosiert wird, so erfolgt dieses vorzugsweise ungefähr nach der Hälfte der gesamten Verfahrenslänge des Extruders.

Wenn die Regenerierung in einem Innenmischer durchgeführt wird, so unterliegt die Art des innenmischers keiner besonderen Beschränkung. Geeignet sind beispielsweise Innenmischer mit ineinander greifenden oder mit tangierenden Rotoren. Dabei ist ein Innenmischer mit ineinander greifenden Rotoren besonders bevorzugt, da auf diese Weise mehr Scherenergie in die einzelnen Teilchen des Gummivulkanisats eingebracht werden kann. In Abhängigkeit des zu regenerierenden Gummivulkanisats können in dem Innenmischer unterschiedlichen Volumenfüllgrade eingestellt werden. Dabei ist im Allgemeinen ein hoher bis sehr hoher Volumenfüllgrad von bis zu 120 % der nominellen Füllmenge möglich; im Allgemeinen werden Volumenfüllgrade von 60 bis 120 %, vorzugsweise 70 bis 110 %, besonders bevorzugt 80 bis 100 %, insbesondere 90 bis 99 %, im erfindungsgemäßen Verfahren realisiert. Hierbei gilt im Allgemeinen, dass je höher der Vernetzungsgrad des Vulkanisates und / oder je geringer der Doppelbindungsgehalt des zugrundeliegenden Kautschuks ist, desto höher sollte der Volumenfüllgrad sein. Bei bestimmten Arten von Gummivulkanisaten, wie beispielsweise bei Butylkautschuk, kann es vorteilhaft sein, mit einem Überfüllten Innenmischer mit Volumenfüllgraden von mehr als 100 % zu arbeiten. Die erfindungsgemäß vorgesehenen relativ hohen Volumenfüllgrade sind im Allgemeinen bevorzugt, da ein hoher Volumenfüllgrad im Allgemeinen ein Kompaktieren der Teilchen der Gummivulkanisate sowie einen Radikalstart bewirkt. Insgesamt ist es daher bevorzugt, wenn die Teilchen der Gummivulkanisate bis zu einem Volumenfüllgrad von mindestens 70 %, besonders bevorzugt mindestens 75 %, insbesondere mindestens 80 %, speziell mindestens 85 %, in den Innenmischer gefüllt werden. Bei Durchführung des erfindungsgemäßen Verfahrens in einem Einscheckenextruder kann der Volumnenfüllgrad bauartbedingt 100 % nicht überschreiten; bei Mehrschneckenextruder muss der Volumenfüllgrad weniger als 100 % betragen.

Die Durchführung der Regenerierung in einem Innenmischer erfolgt im Allgemeinen wie folgt: Die Teilchen der zu regenerierenden Gummivulkanisate werden mit einem wie zuvor definierten Volumenfüllgrad in dem Innenmischer vorgelegt. Gegebenenfalls wird der Volumenfüllgrad durch die Zugabe weiterer Additive erhöht, und anschließend wird das erfindungsgemäße Regenerierungsmittel zugesetzt. Auch dabei kann es noch zu einer weiteres Änderung des Volumenfüllgrades des Innenmischers kommen.

Nach der Zugabe des erfindungsgemäß vorgesehenen Regenerierungsmittels wird der Innenmischer gegebenenfalls noch mit einem Öl, beispielsweise Paraffinöl, beaufschlagt. Die Art des dabei verwendeten Öls hängt im Allgemeinen von der Art des zu regenerierenden Gummivulkanisats ab. Beispielsweise wird bei der Regenerierung von EPDM-Kautschuken vorzugsweise Paraffinöl verwendet. Die Zugabe von Öl während der Regenerierung bewirkt im Allgemeinen, dass die Masse in dem Innenmischer weiter kompaktiert wird und gleichzeitig die Masse gekühlt wird, so dass ein Durchgehen der Regenerierung vermieden werden kann. Durch die zusätzliche Einwirkung entsprechender Scherkräfte kommt es zu einer Devulkanisation.

In beiden Ausführungsformen können während der Regenerierung sowohl im Innenmischer als auch im Extruder der zu regenerierenden Gummimasse weitere Additive zugegeben werden. Beispiele für weitere Additive sind helle Füllstoffe, beispielsweise gefällte oder pyrogene Kieselsäuren, um die Viskosität der Mischung anzupassen, eine zusätzliche Scherung zu erreichen und um den Volumenfüllgrad variabel auf mehr als 100 % einzustellen. Weitere geeignete Additive sind Verarbeitungswirkstoffe, beispielsweise Verarbeitungswirkstoff der Reihe Aktiplast^{®} der Firma Rhein Chemie Rheinau GmbH. Bei diesen Verarbeitungswirkstoffen handelt sich um Kombinationen von Zinksalzen mit nativen Ölen, wie beispielsweise Sojaöl bzw. Rapsöl, und gegebenenfalls weiteren Inhaltsstoffen. Die Aktiplast^{®}- Verarbeitungswirkstoffe steuern während dem Regenerieren der Gummivulkanisate die Kompaktierung der Teilchen der Gummivulkanisate.
Die Mengen an erfindungsgemäßem Regenerierungsmittel, gegebenenfalls vorhandenen weiteren Regenerierungsmitteln bzw. Mastiziermitteln sowie an weiteren gegebenenfalls verwendeten Additiven können in weiten Bereichen variieren und sind von verschiedenen Faktoren abhängig. Hierzu zählen beispielsweise die Art der zu regenerierenden Gummivulkanisate (sortenreine oder gemischte Vulkanisate), Partikelgröße der Gummivulkanisate, gewünschter Anteil des regenerierten Gummivulkanisate in Frischmischungen, Verwendungsart der regenerierten Gummivulkanisate etc. Der Fachmann kann jedoch entsprechend geeignete Mengen einfach über Routineversuche vermitteln. Sie betragen beispielsweise 1 bis 40 %, vorzugsweise 2 bis 30 %, besonders bevorzugt 3 bis 20 %, insbesondere 4 bis 10 %, jeweils bezogen auf die Gesamtmischung, die der Regenerierung zugeführt wird.

Die Durchführung der Regeneration kann in beiden Ausführungsformen (Extruder und Innenmischer) sowohl bei Temperatur im Allgemeinen höher als 50 °C, vorzugsweise 52 °C, besonders bevorzugt 54 °C, insbesondere 56 °C, speziell 58 °C, besonders speziell 60 °C, als auch bei erhöhter Temperatur durchgeführt werden. Eine bevorzugte Regenerationstemperatur liegt im Allgemeinen höher als 80 °C, vorzugsweise 90 °C, besonders bevorzugt 100 °C, insbesondere 110 °C, speziell 120 °C, besonders speziell 130 °C. Im Allgemeinen sollte die Temperatur und die verwendete Scherrate umso größer sein, je höher der Grad an Sättigung in dem Polymer ist und je höher der Gehalt an verwendeten Materialien in der Regenerierung ist.

Die Durchführung der Regeneration kann sowohl bei Normaldruck als auch bei erhöhtem Druck durchgeführt werden. Ein bevorzugter Regenerationsdruck liegt zwischen 1 und 20 bar, ein besonders bevorzugter Regenerationsdruck liegt zwischen 1 und 10 bar und ein ganz besonders bevorzugter Regenerationsdruck liegt zwischen 1 und 3 bar.

Um unerwünschte Nebenreaktionen während der Regenerierung, insbesondere bei erhöhten Temperaturen, zu vermeiden, wird das erfindungsgemäße Verfahren vorzugsweise unter Ausschluss von Sauerstoff durchgeführt.

Darüber hinaus hat es sich als vorteilhaft erwiesen, wenn beispielsweise Naturkautschuk und Styrol-Butadien-Kautschuke bei einer Temperatur von 70 bis 250 °C, besonders bevorzugt 75 bis 200 °C, insbesondere 80 bis 150 °C, regeneriert werden.

Darüber hinaus ist es bevorzugt, wenn gemischte Gummivulkanisate in einem Innenmischer verarbeitet werden und Gummivulkanisatmischungen aus Polydienen (beispielsweise NR, SBR und NBR) und Gummivulkanisaten mit wenigen Doppelbindungen vor der Regenerierung getrennt werden.

Nach dem Ende der Devulkanisation in dem Extruder oder dem Mischer wird das resultierende Produkt vorzugsweise auf einer Walze abgekühlt und vorzugsweise zu einem Fell geformt. Dabei ist es weiter bevorzugt, wenn die Walze einen eng eingestellten Spalt aufweist und kalt ist. In dem Fall der Verwendung einer Extrudervorrichtung mit einem sehr dünnen Mundstück, beispielsweise von 1 mm oder weniger, kann auf diese Aufarbeitung verzichtet werden.

Die tatsächlich auftretenden Scherkräfte im Extruder bzw. Innenmischer werden durch die Umfangsgeschwindigkeit der Rotoren bzw. der Schnecken, von deren Drehzahl, vom Spaltmaß der Maschine und von den Viskositäten der Gummimaterialien bestimmt.

Das durch die zuvor beschriebenen Verfahren erhältliche devulkanisierte Produkt kann auf übliche Weise konfektioniert, zwischengelagert und eingeschnitten werden.

Das durch die zuvor beschriebenen Verfahren erhältliche devulkanisierte Produkt kann durch enge Düsen (z.B. durch kleine Runddüsen, schmale Breitschlitzdüsen oder Garvey-Düsen) extrudiert werden, ohne dass mehr Stippen entstehen, als bei Frischmaterial üblich ist. Das devulkanisierte Produkt kann neu vernetzt werden und vollständig zu neuen Fertigartikeln eingesetzt werden. Darüber hinaus ist es auch möglich, das devulkanisierte Produkt in niedrigen oder in hohen Anteilen in frische zu vulkanisierende Mischungen einzuarbeiten, wobei das regenerierte Produkt mit dem Frischmaterial vernetzt wird. Weiterer Gegenstand der vorliegenden Erfindung ist Verwendung von Dialkylpolysulfiden zur Regenerierung von schwefelvernetzten Gummivulkanisaten. Für weitere Ausgestaltungen dieser Verwendung wird auf die obigen Ausführungen hinsichtlich des erfindungsgemäßen Verfahrens verwiesen.

Die vorliegende Erfindung wird anhand der nachfolgenden Beispiele näher erläutert, wobei die vorliegende Erfindung keinesfalls auf die Beispiele beschränkt ist.

### Beispiele:

### (1) Beispiel 1

Es wird folgender Masterbatch in einem Innenmischer und einer Walzenmühle erzeugt:
(a) Innenmischer

| | |
|---|---|
| Buna EP G 6850 | 100 |
| N 550 | 90 |
| Silitin^{®} N 85 | 50 |
| Paraffinöl | 75 |
| ZnO aktiv | 5 |
| PEG 4000 | 2 |
| Stearinsäure | 1 |
| Rhenosorb^{®} C | 5 |

(b) Walzenmühle

| | |
|---|---|
| Rhenogran^{®} S-80 | 2 |
| Rhenogran^{®} MBTS-80 | 2 |
| Rhenogran^{®} ZBEC-70 | 1,5 |
| Rhenogran^{®} ZDT/G | 1,5 |
| Rhenogran^{®} S/G | 1 |

(alle Angaben in phr, bezogen auf Buna EP G 6850)

Aus dem Masterbatch wird ein einheitliches Material gebildet und anschließend wird bei 180 °C eine Formgebung in unterschiedliche Formen durchgeführt. Die Formen werden auf einer Walzenmühle in Teilchen mit einer Größe von 1 bis 3 mm zerkleinert. Anschließend wird das erhaltene zerkleinerte Gummivulkanisat gemäß folgender Verfahrensweise regeneriert.

### (I) Allgemeine Verfahrensweise I

| | |
|---|---|
| Innenmischer (für IIR oder EPDM) mit ineinander greifenden Rotoren | |
| Volumenfüllgrad: | mehr als 80 % zu regenerierendes Gummivulkanisat |
| Gesamter | |
| Volumenfüllgrad: | mehr als 90 % |
| Temperatur: | höher als 100 °C |
| Rotorgeschwindigkeit: | 60 bis 80 U/min |

Die Zugabe des Gummivulkanisat erfolgt bei 85 °C. Nach 1 Minute wird Aktiplast^{®} 8 (5 Gew.-Teile, 125 °C) und nach 5 Minuten wird Renacit^{®} 11 (3 Gew.-Teile, 120 °C) zugegeben.

Das erfindungsgemäße Regenerierungsmittel Dioctylpentasulfid wird nach 10 Minuten in einer Menge von 5 bis 15 Gew.-Teilen bei 127 °C zugegeben (die genaue Menge an Dioctylpentasulfid (Additin ^{®} RC 2540) variiert in den einzelnen Versuchen in dem oben genannten Bereich).

Im Anschluss wird nach 11 Minuten gegebenenfalls ein Füllstoff (130 °C) zugegeben und die gewünschte sehr hohe Viskosität der Prozessmischung nach 15 Minuten eingestellt Die erhöhte Viskosität führt zu einem Temperaturanstieg auf bis zu 170 °C.

Die Menge an Füllstoff variierte von 0 bis 15 Gew.-% in den einzelnen Versuchen.

Das erhaltene Produkt wird abgekühlt.

### (11) Allgemeine Verfahrensweise II

| | |
|---|---|
| Innenmischer (für IIR oder EPDM) mit ineinander greifenden Rotoren | |
| Volumenfüllgrad: | mehr als 90 % zu regenerierendes Gummivulkanisat |
| Gesamter | |
| Volumenfüllgrad: | mehr als 100 % |
| Temperatur: | höher als 100 °C |
| Rotorgeschwindigkeit: | 60 bis 80 U/min |

Die Zugabe des Gummivulkanisat erfolgt bei 95 °C. Nach 1 Minute wird Aktiplast^{®} 8 (5 Gew.-Teile, 130 °C) und nach 5 Minuten wird Renacit^{®} 11 (3 Gew.-Teile, 135 °C) zugegeben.

Das erfindungsgemäße Regenerierungsmittel Dioctylpentasulfid wird nach 10 Minuten in einer Menge von 5 bis 15 Gew.-Teilen bei 140 °C zugegeben (die genaue Menge an Dioctylpentasulfid (Additin^{®} RC2540) variiert in den einzelnen Versuchen in dem oben genannten Bereich).

Im Anschluss wird nach 11 Minuten gegebenenfalls ein Füllstoff (165 °C) zugegeben und die gewünschte sehr hohe Viskosität der Prozessmischung nach 15 Minuten eingestellt. Die erhöhte Viskosität führt zu einem Temperaturanstieg auf bis zu 180 °C. Die Menge an Füllstoff variiert von 0 bis 15 Gew.-% in den einzelnen Versuchen.

Das erhaltene Produkt wird abgekühlt.

### (III) Allgemeine Verfahrensweise III

| | |
|---|---|
| Innenmischer (für Dienkautschuk) mit ineinander greifenden Rotoren | |
| Volumenfüllgrad: | 80 % des zu regenerierenden Gummivulkanisats |
| Gesamter | |
| Volumenfüllgrad: | mehr als 100 % |
| Temperatur: | Starttemperatur bei 80 °C Vermeidung von Temperaturen oberhalb 130 °C |
| Rotorgeschwindigkeit: | 60 bis 80 U/min |
| Maximale Zykluszeit: | 10 Minuten |

Die Zugabe des Gummivulkanisat erfolgt bei 76 °C. Nach 1 Minute wird Aktiplast^{®} 8 (5 Gew.-Teile, 90 °C) und nach 5 Minuten wird Renacit^{®} 11 (3 Gew.-Teile, 95 °C) zugegeben.

Das erfindungsgemäße Regenerierungsmittel Dioctylpentasulfid wird nach 6 Minuten in einer Menge von 5 bis 15 Gew.-Teilen bei 110 °C zugegeben (die genaue Menge an Dioctylpentasulfid (Additin^{®} RC2540) variiert in den einzelnen Versuchen in dem oben genannten Bereich).

Im Anschluss wird nach 9 Minuten gegebenenfalls ein Füllstoff (125 °C) zugegeben und die gewünschte sehr hohe Viskosität der Prozessmischung eingestellt. Die erhöhte Viskosität führt zu einem Temperaturanstieg auf bis zu 120 °C. Die Menge an Füllstoff variiert von 0 bis 15 Gew.-% in den einzelnen Versuchen.

Das erhaltene Produkt wird abgekühlt.

Es werden die folgenden schwefelvernetzten Gummivulkanisate einer Regenerierung unterzogen (Tabelle 1). Die einzelnen Versuche liefern die in Tabelle 2 dargestellten Ergebnisse.

**Tabelle 1**

| | Versuch | 1 | 2 | 3 | 4 | 5 | 6 | 7 |
|---|---|---|---|---|---|---|---|---|
| EPDM Masterbatch | phr | 328 | 318 | 308 | 298 | 298 | 288 | 0 |
| Gummivulkanisat | | 0 | 10 | 20 | 30 | 30* | 40 | 100 |
| Rhenogran® ZnO-80 | | 2,5 | 2,5 | 2,5 | 2,5 | 2,5 | 2,5 | 2,5 |
| Rhenogran® S-80 | | 2 | 2 | 2 | 2 | 2 | 2 | 2 |
| Rhenogran® ZBEC-70 | | 1 | 1 | 1 | 1 | 1 | 1 | 1 |
| Rhenogran® MBT-80 | | 1 | 1 | 1 | 1 | 1 | 1 | 1 |
| Rhenocure® S/G | | 1 | 1 | 1 | 1 | 1 | 1 | 1 |
| Rhenocure® SDT/S | | 1,4 | 1,4 | 1,4 | 1,4 | 1,4 | 1,4 | 1,4 |
| Rhenocure® ZDT/G | | 1 | 1 | 1 | 1 | 1 | 1 | 1 |

| | | | | | | | | |
|---|---|---|---|---|---|---|---|---|
| * Dieses Material wird ohne Zugabe von Renacit® 11 recycelt. | | | | | | | | |

**Tabelle 2**

| | | | | | | | | |
|---|---|---|---|---|---|---|---|---|
| | Versuch | 1 | 2 | 3 | 4 | 5 | 6 | 7 |
| | | | | | | | | |
| Mooney ML 1 +4 bei 100 °C | ME | 40,00 | 43,00 | 45,00 | 44,00 | 45,00 | 45,00 | 39,00 |
| Mooney-Verzögerung bei 140 °C | | | | | | | | |
| † 5 | (min) | 8,42 | 8,42 | 7,78 | 7,65 | 7,49 | 7,58 | 9,98 |
| † 35 | (min) | 12,95 | 13,20 | 11,83 | 12,10 | 11,99 | 12,47 | 15,13 |
| Rheometer Monsanto bei 180 °C | | | | | | | | |
| Fmax - Fmin | (Nm) | 34,65 | 32,21 | 32,70 | 31, 28 | 31,35 | 31,40 | 27,43 |
| † 10 | (min) | 1,33 | 1,23 | 1,21 | 1,25 | 1,22 | 1,19 | 2,30 |
| † 50 | (min) | 2,16 | 1,98 | 2,00 | 2,07 | 2,00 | 1,95 | 2,97 |
| † 90 | (min) | 8,97 | 8,56 | 8,27 | 8,44 | 8,36 | 8,53 | 10,07 |
| Vmax | (Nm/min) | 21,37 | 20,66 | 20,45 | 19,13 | 19,89 | 19,04 | 16,33 |
| Rheovulkameter | | | | | | | | |
| Injektionsvolumen | (mm³) | 1665,00 | 1545,00 | 1470,00 | 1360,00 | 1325,00 | 1340,00 | 1 123,00 |
| Injectionsgeschwindigkeit | (mm³/S) | 118,70 | 109,70 | 102,60 | 98,30 | 97,50 | 98,00 | 88,00 |
| Vulkanisation, 1,5* t90 bei 180 °C | | | | | | | | |
| Compression Set nach 24 h bei 125 °C | | 68,00. | 70,00 | 71,00 | 71,00 | 70,00 | 71,00 | 78,00 |
| Shore-A-Härte | | 66,00 | 65,00 | 64,00 | 67,00 | 67,00 | 68,00 | 63,00 |
| Elastizität | (%) | 45,00 | 45,00 | 44,00 | 43,00 | 44,00 | 45,00 | 42,00 |
| Modulus bei 300 % | (MPa) | 6,60 | 7,10 | 6,80 | 7,00 | 7,10 | 6,90 | 5,90 |
| Reißfestigkeit | (MPa) | 8,10 | 8,20 | 8,40 | 8,30 | 8,20 | 8,60 | 9,80 |
| Reißdehnung | (%) | 386,00 | 365,00 | 389,00 | 396,00 | 392,00 | 401,00 | 460,00 |

Wie aus der Tabelle 2 ersichtlich, können unter Verwendung des erfindungsgemäßen Regenerierungsmittels schwefelvernetzte Gummivulkanisate ohne Einschränkung recycelt werden.

## Patentansprüche

1. Verfahren zur Regenerierung von schwefelvernetzten Gummivulkanisaten, **dadurch gekennzeichnet, dass** man bei der Regenerierung mindestens ein Dialkylpolysulfid als Regenerierungsmittel verwendet.

2. Verfahren nach Anspruch 1, **dadurch gekennzeichnet, dass** die schwefelvernetzten Gummivulkanisate ausgewählt sind aus der Gruppe, bestehend aus den Polydienen der R-Gruppe, umfassend Naturkautschuke (NR), Styrol-Butadien-Kautschuke (SBR), Acrylnitril-Butadien-Kautschuke (NBR) und Butylkautschuke (IIR), aus Vulanisaten aus Kautschuken mit wenigen Doppelbindungen oder doppelbindungsfreien Polymerhauptketten aus der M-Gruppe, umfassend EPDM, und Mischungen davon.

3. Verfahren nach Anspruch 1 oder 2, **dadurch gekennzeichnet, dass** man Dialkylpolysulfide der allgemeinen Formel (1) verwendet, 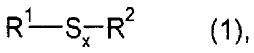 worin
R¹ und R² gleich oder verschieden sind und für einen linearen oder verzweigten C₁-C₁₈-Alkylrest stehen und x für die Zahlen 2 bis 12 steht.

4. Verfahren nach einem der Ansprüche 1 bis 3, **dadurch gekennzeichnet, dass** man als Dialkylpolysulfid verzweigtes Dioctylpentasulfid oder Dioctyltetrasulfid einsetzt.

5. Verfahren nach einem der Ansprüche 1 bis 4, **dadurch gekennzeichnet, dass** die zu regenerierenden Gummivulkanisate einer Vorbehandlung vor der Regenerierung unterzogen werden.

6. Verfahren nach Anspruch 7, **dadurch gekennzeichnet, dass** als Vorbehandlung eine Zerkleinerung der Gummivulkanisate in Teilchen durchgeführt wird.

7. Verfahren nach einem der Ansprüche 1 bis 6, **dadurch gekennzeichnet, dass** die Regenerierung in einem Extruder durchgeführt wird.

8. Verfahren nach Anspruch 7, **dadurch gekennzeichnet, dass** als Extruder ein Doppelschneckenextruder oder Planetwalzenextruder verwendet wird.

9. Verfahren nach einem der Ansprüche 1 bis 6, **dadurch gekennzeichnet, dass** die Regenerierung in einem Innenmischer durchgeführt wird.

10. Verfahren nach Anspruch 9, **dadurch gekennzeichnet, dass** als Innenmischer ein Innenmischer mit ineinander greifenden oder mit tangierenden Rotoren verwendet wird.

11. Verfahren nach Anspruch 9 oder 10, **dadurch gekennzeichnet, dass** während der Regenerierung in dem Innenmischer ein Volumenfüllgrad von mindestens 70 % eingestellt wird.

12. Verfahren nach einem der Ansprüche 1 bis 11, **dadurch gekennzeichnet, dass** bei der Regenerierung weitere Additive, ausgewählt aus der Gruppe, bestehend aus Mastiziermittel, hellen Füllstoffen und Verarbeitungswirkstoffen, verwendet werden.

13. Verwendung von Dialkylpolysulfiden zur Regenerierung von schwefelvernetzen Gummivulkanisaten.

14. Verwendung nach Anspruch 13, **dadurch gekennzeichnet, dass** man Dialkylpolysulfide der allgemeinen Formel (1) verwendet, 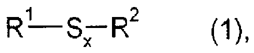 worin
R¹ und R² gleich oder verschieden sind und für einen linearen oder verzweigten C₁-C₁₈-Alkylrest stehen und x für die Zahlen 2 bis 12 steht.

15. Verwendung nach einem der Ansprüche 13 bis 14, **dadurch gekennzeichnet, dass** man als Dialkylpolysulfid verzweigtes Dioctylpentasulfid verwendet.

## Claims

1. Process for the recycling of sulphur-crosslinked rubber vulcanizates, **characterized in that** the recycling process uses at least one dialkyl polysulphide as recycling agent.

2. Process according to Claim 1, **characterized in that** the sulphur-crosslinked rubber vulcanizates have been selected from the group consisting of the polydienes of the R group, encompassing natural rubbers (NR), styrene-butadiene rubbers (SBR), acrylolnitrile-butadiene rubbers (NBR) and butyl rubbers (IIR), of vulcanizates made of rubbers having few double bonds or double-bond-free main polymer chains from the M group, encompassing EPDM, and mixtures thereof.

3. Process according to Claim 1 or 2, **characterized in that** dialkyl polysulphides of the general formula (1) are used 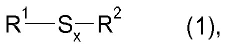 in which
R¹ and R² are identical or different and are a linear or branched C₁-C₁₈-alkyl moiety and x is the numbers from 2 to 12.

4. Process according to any of Claims 1 to 3, **characterized in that** the dialkyl polysulphide used comprises branched dioctyl pentasulphide or dioctyl tetrasulphide.

5. Process according to any of Claims 1 to 4, **characterized in that** the rubber vulcanizates to be recycled are subjected to a pre-treatment prior to the recycling process.

6. Process according to Claim 7, **characterized in that** the pre-treatment carried out comprises a comminution of the rubber vulcanizates to give particles.

7. Process according to any of Claims 1 to 6, **characterized in that** the recycling process is carried out in an extruder.

8. Process according to Claim 7, **characterized in that** the extruder used comprises a twin-screw extruder or planetary-gear extruder.

9. Process according to any of Claims 1 to 6, **characterized in that** the recycling process is carried out in an internal mixer.

10. Process according to Claim 9, **characterized in that** the internal mixer used comprises an internal mixer with intermeshing or mutually tangential rotors.

11. Process according to Claim 9 or 10, **characterized in that** the fill level by volume during the recycling process in the internal mixer is at least 70%.

12. Process according to any of Claims 1 to 11, **characterized in that** the recycling process uses further additives, selected from the group consisting of masticating agents, pale-coloured fillers and processing aids.

13. Use of dialkyl polysulphides for the recycling of sulphur-crosslinked rubber vulcanizates.

14. Use according to Claim 13, **characterized in that** dialkyl polysulphides of the general formula (1) are used 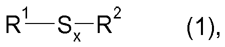 in which
R¹ and R² are identical or different and are a linear or branched C₁-C₁₈-alkyl moiety and x is the numbers from 2 to 12.

15. Use according to either of Claims 13 and 14, **characterized in that** the dialkyl polysulphide used comprises branched dioctyl pentasulphide.

## Revendications

1. Procédé de régénération de vulcanisats de caoutchouc réticulés au soufre, **caractérisé en ce qu'**au moins un polysulfure de dialkyle est utilisé en tant qu'agent de régénération lors de la régénération.

2. Procédé selon la revendication 1, **caractérisé en ce que** les vulcanisats de caoutchouc réticulés au soufre sont choisis dans le groupe constitué par les polydiènes du groupe R, comprenant les caoutchoucs naturels (NR), les caoutchoucs de styrène-butadiène (SBR), les caoutchoucs d'acrylonitrile-butadiène (NBR) et les caoutchoucs de butyle (IIR), les vulcanisats de caoutchoucs comprenant peu de doubles liaisons ou des chaînes principales polymères exemptes de doubles liaisons du groupe M, comprenant l'EPDM, et leurs mélanges.

3. Procédé selon la revendication 1 ou 2, **caractérisé en ce que** des polysulfures de dialkyle de formule générale (1) sont utilisés
R¹-Sₓ-R² (1)
dans laquelle
R¹ et R² sont identiques ou différents, et représentent un radical alkyle en C₁-C₁₈ linéaire ou ramifié, et x représente les nombres 2 à 12.

4. Procédé selon l'une quelconque des revendications 1 à 3, **caractérisé en ce que** du pentasulfure de dioctyle ramifié ou du tétrasulfure de dioctyle est utilisé en tant que polysulfure de dialkyle.

5. Procédé selon l'une quelconque des revendications 1 à 4, **caractérisé en ce que** les vulcanisats de caoutchouc à régénérer sont soumis à un prétraitement avant la régénération.

6. Procédé selon la revendication 7, **caractérisé en ce qu'**un broyage des vulcanisats de caoutchouc en particules est réalisé en tant que prétraitement.

7. Procédé selon l'une quelconque des revendications 1 à 6, **caractérisé en ce que** la régénération est réalisée dans une extrudeuse.

8. Procédé selon la revendication 7, **caractérisé en ce qu'**une extrudeuse bivis ou une extrudeuse planétaire est utilisée en tant qu'extrudeuse.

9. Procédé selon l'une quelconque des revendications 1 à 6, **caractérisé en ce que** la régénération est réalisée dans un mélangeur interne.

10. Procédé selon la revendication 9, **caractérisé en ce qu'**un mélangeur interne à rotors imbriqués ou tangents est utilisé en tant que mélangeur interne.

11. Procédé selon la revendication 9 ou 10, **caractérisé en ce qu'**un degré de remplissage en volume d'au moins 70 % est ajusté pendant la régénération dans le mélangeur interne.

12. Procédé selon l'une quelconque des revendications 1 à 11, **caractérisé en ce que** des additifs supplémentaires choisis dans le groupe constitué par les agents de masticage, les charges claires et les agents d'usinage sont utilisés lors de la régénération.

13. Utilisation de polysulfures de dialkyle pour la régénération de vulcanisats de caoutchouc réticulés au soufre.

14. Utilisation selon la revendication 13, **caractérisée en ce que** des polysulfures de dialkyle de formule générale (1) sont utilisés
R¹-Sₓ-R² (1)
dans laquelle
R¹ et R² sont identiques ou différents, et représentent un radical alkyle en C₁-C₁₈ linéaire ou ramifié, et x représente les nombres 2 à 12.

15. Utilisation selon l'une quelconque des revendications 13 à 14, **caractérisée en ce que** du pentasulfure de dioctyle ramifié est utilisé en tant que polysulfure de dialkyle.
